# FASCICULE DE BREVET EUROPEEN

(11) **EP 3 683 177 B1**
(45) Date de publication et mention de la délivrance du brevet: **13.01.2021**
(21) Numéro de dépôt: 20161209.0
(22) Date de dépôt: 06.07.2015
(51) Int. Cl.: B65H 51/14, H02G 1/10

(54) **DISPOSITIF DE HALAGE D'UN OBJET DE FORME TUBULAIRE DE GRANDE LONGUEUR**
VORRICHTUNG ZUM EINHOLEN EINES ROHRFÖRMIGEN OBJEKTS GROSSER LÄNGE
DEVICE FOR HAULING AN EXTENDED-LENGTH TUBULAR SHAPED OBJECT

(30) Priorité: 04.07.2014 FR 1401505
(43) Date de publication de la demande: 22.07.2020
(62) Demande divisionnaire de: 15734364.1
(73) Titulaire: Thales, 92400 Courbevoie (FR)
(72) Inventeur: LONGUET, Jean-Philippe, 29200 BREST (FR); LE GRAS, Hervé, 06330 ROQUEFORT LES PINS (FR); COSSON, Olivier, 29810 PLOUARZEL (FR); PEDEN, Benoît, 29400 GUIPAVAS (FR); LAGADEC, Jean, 29850 GOUESNOU (FR)
(74) Mandataire: Marks & Clerk France

(56) Documents cités:
- FR-A- 1 119 158
- FR-A1- 2 511 662
- FR-A1- 2 858 309
- US-A- 4 274 574

## Description

La présente invention concerne un dispositif de halage d'objets allongés de grande longueur. Ce dispositif permet notamment de mettre à la mer ou bien de remonter et de stocker en cale un objet tubulaire de grande longueur et de structure relativement souple et fragile. Parmi ces objets on peut notamment citer des câbles sous-marins, des tuyaux ou encore des antennes sonar linéaires de type "flûte".

La manipulation d'objets de forme sensiblement tubulaire et de grande longueur est une opération délicate, en particulier lorsque l'objet manipulé a une structure souple et fragile comportant par exemple une succession d'objets relativement fragiles mis dans une gaine tubulaire plus souple, ou encore lorsque l'objet présente des irrégularités de diamètre sur sa longueur. Le problème se pose en particulier dans le cas des systèmes sonars équipant des batiments de surface ou des batiments sous-marins. L'efficacité de la détection de ces systèmes dépend fortement de la longueur de l'antenne, et on a généralement recours à des antennes tubulaires de grande longueur, par exemple de type flute. De manière connue, de telles antennes linéaires présentent une longueur de plusieurs centaines de mètres pour un diamètre de l'ordre de quelques centimètres. Lors d'une mission, l'antenne doit être mise à la mer, déployée sur une longueur suffisante, puis remontée à bord du batiment en fin de mission. Cette opération est délicate, tant dans le cas d'un batiment de surface, susceptible d'être exposé à une mer agitée, que dans le cas d'un batiment sous-marin pour lequel l'antenne et le dispositif de halage sont immergés.

Divers dispositifs de halage ont tenté de résoudre ces difficultés. On connait par exemple du brevet publié sous la référence US 5,839,636, un dispositif de type caterpillar assurant le halage de l'antenne au moyen de deux chenilles en regard l'une de l'autre et en contact de l'antenne à déplacer. On connait aussi de la demanderesse, le dispositif de halage décrit dans la demande de brevet publiée sous la référence FR 2858309. Le principe de ce dispositif connu est rappelé ci-dessous au moyen de la figure 1. L'idée générale du dispositif est de découpler les efforts exerçés sur l'objet à haler en séparant entre des moyens assurant de manière continue la préhension de l'objet et des moyens assurant la traction de l'objet.

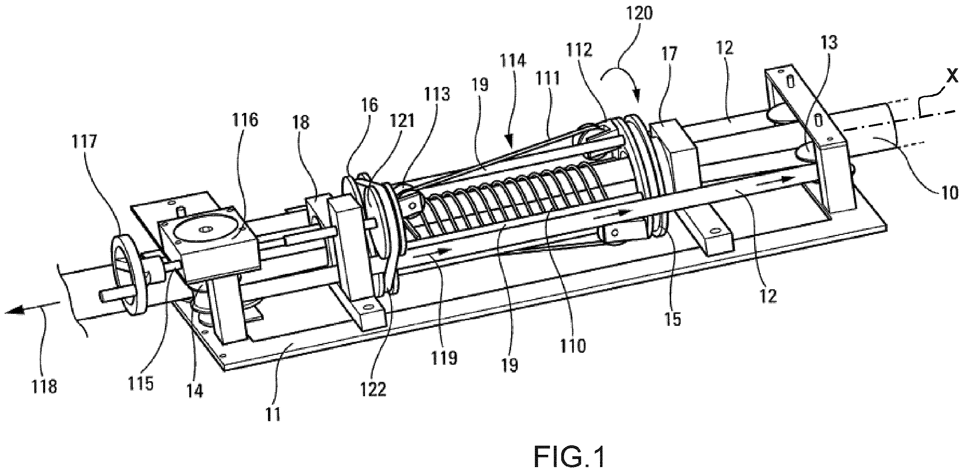

Comme illustré sur la figure 1, un tel dispositif de halage comprend un châssis 11 supportant les deux moyens suivants :
- des moyens de traction, principalement constitués de deux bandes de roulement 12 disposées de part et d'autre et le long de l'objet à haler 10. Chaque bande 12 est enroulée autour de deux poulies 13 et 14 fixées sur des montants situés à chacune des extrémités du châssis principal.
- des moyens de préhension, constitués d'un premier flasque 15 et d'un second flasque 16, en forme de disques, reliés l'un à l'autre par des montants 19. Les flasques 15 et 16 sont montés mobiles en rotation autour de l'axe longitudinal du dispositif référencé X, au moyen des pièces de maintien 17 et 18, par l'intermédiaire de paliers par exemple. L'ensemble forme un châssis 114 mobile en rotation par rapport au chassis 11. Les parties centrales des flasques 15 et 16 et des pièces de maintien 17 et 18 sont évidées, de façon à pouvoir être traversées par l'objet 10 à haler et les bandes de roulement 12.

Les moyens de préhension assurent le contact entre les bandes de roulement 12 et l'objet à haler 10 au moyen d'une courroie 110 bobinée en hélice autour de l'objet à haler et des portions des bandes de roulement en contact avec l'objet. Le bobinage est suffisamment serré pour maintenir l'objet et les bandes de roulement en contact étroit. Les extrémités de la courroie sont raccordées entre elles pour former un brin droit 111 qui passe dans les gorges des poulies opposées 112 et 113, fixées respectivement sur chacun des flasques 15 et 16. Ces poulies 112, 113 ont notamment pour fonction d'assurer la tension des courroies fixées respectivement sur chacun des flasques 15, 16. L'ensemble constitué des flasques 15 et 16 et des montants 19 forme un châssis 114 mobile en rotation autour de l'axe longitudinal du dispositif.

Pour réaliser le halage de l'objet 10, le dispositif comporte également des moyens pour mettre en mouvement les moyens de traction et de préhension. Ces moyens comportent un arbre principal 115 et un système d'engrenage et de réducteurs 116 sur lequel sont accouplés des arbres secondaires permettant de mettre en rotation les poulies 14 qui assurent l'entraînement des bandes roulement 12, ainsi que la poulie 16 qui entraîne en rotation le châssis 114. Dans l'exemple de réalisation, la poulie 16 est couplée par l'intermédiaire d'une courroie 122 à une autre poulie 121 solidaire de l'arbre 115.

Pour assurer le déplacement de l'objet 10 dans la direction figurée par la flèche 118, on actionne l'arbre 115 au moyen d'un volant 117 de façon à ce que la rotation des poulies 14 entraîne le déplacement des bandes de roulement 12 dans le sens figuré par les flèches 119. Le déplacement des bandes de roulement entraîne un déplacement identique de l'objet 10. Simultanément, la rotation de l'arbre 115 met en rotation le châssis 114 dans le sens figuré par la flèche 120. Cette rotation entraîne le bobinage des courroies 110 du côté du flasque 15 et un débobinage simultané du côté du flasque 16. Cette double action a pour effet de provoquer un déplacement relatif des moyens de préhension le long de l'objet 10, suivant une direction opposée au déplacement réel de l'objet 10 et des bandes de roulement 12. Ainsi, l'objet 10 est en mesure de progresser linéairement tout en étant maintenu étroitement en contact avec les bandes de roulement. Le mouvement de déplacement de l'objet est analogue au déplacement linéaire et continu du mors libre d'un étau le long de la vis sans fin qui permet le serrage, lorsqu'on serre ou desserre l'étau. Inversement, le fonctionnement du dispositif étant par construction symétrique, le déplacement de l'objet 10 dans la direction opposée pourra être assuré en manœuvrant l'arbre 115 dans le sens opposé au moyen du volant 117. Pour que l'action de halage soit effectivement réalisable, le mouvement de rotation du châssis entraîne un déplacement relatif sensiblement égal au déplacement imprimé à l'objet par la rotation des bandes de roulement 12. La coordination des deux mouvements peut être assurée par des moyens mécaniques, par exemple un dispositif réducteur monté sur l'arbre 115.

Ce dispositif présente de nombreux avantages en comparaison des dispositifs antérieurs par exemple de type caterpillar. En particulier, la séparation des fonctions de préhension et de traction en deux moyens permet de découpler les deux efforts exercés sur l'objet, permettant d'exercer une traction efficace, sans avoir à exercer une pression trop forte, voire dommageable sur l'objet à haler. En pratique, on a toutefois constaté des difficultés que la présente invention cherche à résoudre.

La courroie des moyens de préhension est un composant clé du dispositif de halage. Au cours du halage, la courroie est bobinée et débobinée au moyen du châssis mobile et des poulies en rotation autour de l'objet à haler. Pour assurer la préhension de l'objet, la courroie est aussi sollicitée en tension de manière continue. La courroie, généralement en matériau élastomère, est exposée à l'agressivité du milieu marin, en particulier dans le cas d'un dispositif de halage immergé. Pour ces raisons, on a constaté un vieillissement rapide de la courroie. Le remplacement de la courroie est complexe et nécessite une intervention malaisée sur le dispositif.

L'invention vise à pallier ces difficultés rencontrées par les dispositifs de halage de l'art antérieur, en proposant un dispositif permettant notamment une fiabilité accrue et une réparabilité améliorée.

A cet effet, l'invention a pour objet un dispositif de halage d'objets de forme tubulaire de grande longueur, comprenant :
- des moyens de traction aptes à entrainer par friction, l'objet selon un sens de halage,
- des moyens de préhension aptes à exercer un effort sur les moyens de traction pour maintenir en contact de manière continue les moyens de traction et l'objet halé ; les moyens de préhension étant animés d'un mouvement relatif par rapport à l'objet halé dans un sens opposé au sens de halage,
- des moyens d'entrainement, aptes à entrainer les moyens de traction et les moyens de préhension de manière coordonnée pour assurer une traction continue et homogène de l'objet.

Le dispositif comprend en outre des moyens de réglage, aptes à ajuster l'effort exercé par les moyens de préhension sur les moyens de traction.

Selon l'invention :
- les moyens de traction comprennent une bande de roulement venant en contact de l'objet à haler, réalisée dans un matériau à fort pouvoir d'adhérence,
- les moyens de préhension comprennent deux poulies principales et une courroie tendue entre les deux poulies principales et enroulée en hélice autour de l'objet à haler et la bande de roulement, de façon à exercer un effort sur la bande de roulement pour maintenir en contact de manière continue la bande de roulement sur l'objet à haler,
- les moyens de réglage comprennent une poulie de renvoi pouvant être déplacée par rapport aux deux poulies principales, de sorte à ajuster la tension de la courroie, permettant d'ajuster l'effort exercé par la bande de roulement sur l'objet à haler.

Avantageusement, la courroie est tendue élastiquement.

Selon l'invention :
- les moyens de préhension comprennent un châssis mobile en rotation autour de l'axe de traction de l'objet, formé de deux flasques reliés par des montants longitudinaux et traversés par l'objet à haler et la bande de roulement ; une première et une seconde des deux poulies étant fixées respectivement sur un premier et un second des deux flasques,
- les moyens de réglage comprennent un flasque mobile traversé par l'objet à haler et la bande de roulement, monté entre le premier et le second flasque, la poulie de renvoi étant fixée sur le flasque mobile ; le flasque mobile pouvant être déplacé par translation entre le premier et le second flasques de sorte à ajuster la tension exerçée sur la courroie ; l'une des deux poulies principales étant une poulie double.

Avantageusement, les moyens de préhension comprennent un châssis mobile en rotation autour de l'axe longitudinal de l'objet à haler, les poulies principales étant fixes en translation selon, l'axe longitudinal de l'objet à haler, par rapport au châssis, les poulies principales étant les premières poulies rencontrées par la courroie de part et d'autre de son enroulement autour de l'objet haler.

Avantageusement, la poulie de renvoi peut être déplacée entre une première et une seconde position déterminée de manière à permettre d'exercer sur l'objet à haler un effort compris entre une valeur minimale sensiblement nulle et une valeur maximale prédéterminée.

Avantageusement, le dispositif est destiné au halage d'un objet présentant un relief sur une portion de sa longueur. Les moyens de réglage sont configurés de manière à ce que le déplacement du relief au cours du halage entraine le déplacement de la poulie de renvoi vers sa première position, de sorte à sensiblement annuler l'effort exercé par la bande de roulement sur l'objet à haler.

Avantageusement, les moyens de réglage comprennent un actionneur linéaire apte à déplacer la poulie de renvoi en fonction d'une consigne.

Avantageusement, le dispositif comprend plusieurs première et seconde poulies principales fixées respectivement sur le premier et le second flasques; la courroie étant tendue entre les premières et secondes poulies principales et enroulée en hélice plusieurs fois autour de l'objet à haler et la bande de roulement.

Avantageusement, le dispositif comprend plusieurs courroies et plusieurs première et seconde poulies principales fixées respectivement sur le premier et le second flasques ; chaque courroie étant associée à une première et une seconde poulies principales, tendue entre lesdites première et secondes poulies principales, et enroulée en hélice autour de l'objet à haler et la bande de roulement.

Avantageusement, les moyens de réglage comprennent plusieurs poulies de renvoi fixées sur le flasque mobile.

Avantageusement, les moyens de traction comprennent un mécanisme à ressort configuré pour tendre la bande de roulement de sorte à s'adapter à une variation de diamètre de l'objet à haler.

Avantageusement, les moyens de traction comprennent au moins une bande de roulement présentant une forme en arc de cercle, de sorte à épouser la forme de l'objet à haler sur une portion de sa circonférence.

Avantageusement, les moyens de traction comprennent plusieurs bandes de roulement venant en contact de l'objet à haler, réalisées dans un matériau à fort pouvoir d'adhérence.

Avantageusement, le dispositif comprend un frein capable de ralentir les moyens de préhension ou les moyens de traction.

Avantageusement, le dispositif comprend des moyens de mesure du mouvement de l'objet halé.

L'invention sera mieux comprise et d'autres avantages apparaîtront à la lecture de la description détaillée des modes de réalisation donnés à titre d'exemple sur les figures suivantes.
La figure 1, déjà présentée, représente un dispositif de halage d'un objet selon l'état connu de la technique, comprenant des moyens de traction et des moyens de préhension,
la figure 2 illustre le principe d'un dispositif de halage comprenant des moyens de réglage de l'effort exercé par les moyens de préhension sur les moyens de traction,
les figures 3a et 3b représentent un premier exemple de dispositif de halage comprenant des moyens de réglage de l'effort de préhension, respectivement dans une configuration débrayée et une configuration embrayée,
la figure 4 représente en vue éclaté un second exemple de dispositif de halage comprenant plusieurs sous-ensembles modulaires.

Par souci de clarté, les mêmes éléments porteront les mêmes repères dans les différentes figures.

La présente invention porte sur des améliorations du dispositif de halage décrit en préambule de la présente demande en référence à la demande de brevet FR 2858309. Le dispositif de halage selon l'invention comprend un certain nombre de composants en commun avec ce dispositif de l'art antérieur. Dans la suite, la définition structurelle ou fonctionnelle des composants communs avec le dispositif de l'art antérieur n'est pas reprise de manière systématique, mais se déduit directement de la description de ce dispositif connu. Le dispositif selon l'invention trouve une utilité particulière pour le halage d'une antenne linéaire de grande longueur équipant les systèmes sonars par exemple embarqués sur sous-marin. Il est bien entendu que cette application particulière n'est pas limitative de l'invention qui couvre plus largement un dispositif adapté pour manipuler des objets de forme sensiblement tubulaire et de grande longueur. Le dispositif peut être mis en œuvre dans divers domaines. Le dispositif peut être entièrement immergé en milieu marin dans le cas particulier d'une application sous-marine, ou exposé à l'air ambiant et aux intempéries dans le cas d'un dispositif stationnaire sur terre ou encore dans le cas d'une antenne tractée depuis un batiment de surface.

Dans le but de limiter ou ralentir l'usure des moyens de préhension, l'invention porte en premier lieu sur un dispositif comprenant des moyens permetttant d'ajuster l'effort exerçé par les moyens de préhension sur les moyens de traction de l'objet.

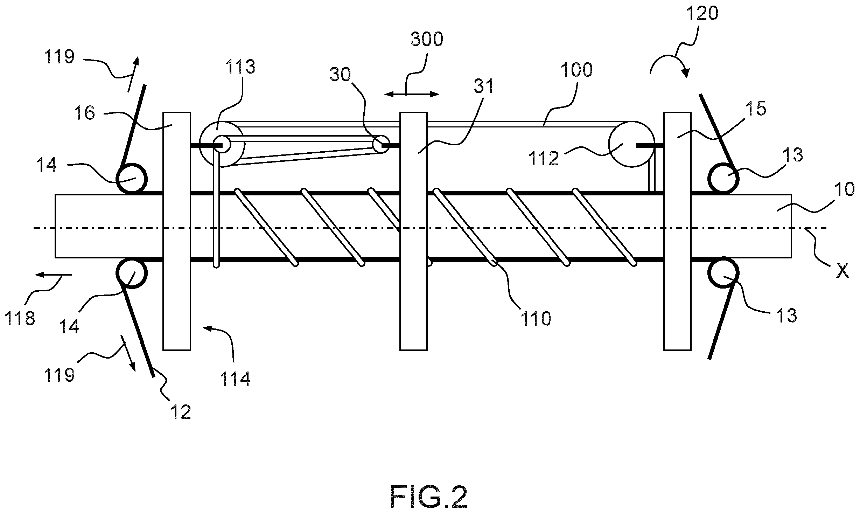

La **figure 2** illustre le principe d'un dispositif de halage comprenant des moyens de réglage, ou sous-ensemble de réglage, pour permettre d'ajuster, au cours du halage de l'objet, l'effort exercé sur les moyens de traction. Comme précédemment, le dispositif de halage comprend :
- des moyens de traction, ou tracteur ou sous-ensemble de traction, aptes à entrainer par friction, l'objet 10 selon un sens de halage 118,
- des moyens de préhension, ou préhenseur ou sous-ensemble de préhension, aptes à exercer un effort sur les moyens de traction pour maintenir en contact de manière continue les moyens de traction et l'objet halé ; les moyens de préhension étant animés d'un mouvement relatif par rapport à l'objet halé dans un sens opposé au sens de halage,
- des moyens d'entrainement, ou dispositif d'entraînement, aptes à entrainer les moyens de traction et les moyens de préhension de manière coordonnée pour assurer une traction continue et homogène de l'objet.

Dans un mode de réalisation privilégié, les moyens de traction comprennent au moins une bande de roulement 12 venant en contact de l'objet à haler, et réalisée dans un matériau à fort pouvoir d'adhérence. La bande de roulement 12 est tendue entre deux poulies 13 et 14 et entrainée en mouvement par les moyens d'entrainement (non représentés). L'adhérence de la bande de roulement permet d'entrainer dans son mouvement, par friction, l'objet à haler 10. Le maintien en contact de manière continue des moyens de traction et de l'objet à haler est réalisé au moins sur une section de l'objet. La surface de la bande 12 venant en contact avec la surface de l'objet 10 est de préférence rugueuse afin d'assurer une meilleur adhérence en traction.

Il est envisagé un dispositif de halage dont les moyens de traction comprennent une unique bande de roulement ou préférentiellement une pluralité de bandes de roulement. Il est notamment envisagé un dispositif comprenant deux bandes de roulement disposées en regard l'une de l'autre et de part et d'autre de l'objet à haler, tel que représenté sur la figure 2. Il est aussi envisagé un dispositif de halage comprenant plus de deux bandes de roulement, par exemple trois ou quatre bandes de roulement, réparties angulairement, en étoile, autour de l'objet à haler.

Dans un mode de réalisation privilégié, les moyens de préhension comprennent au moins une courroie 110 tendue entre deux poulies 112 et 113, dites poulies principales, et enroulée en hélice autour de l'objet à haler 10 et la bande de roulement 12. La courroie 100 forme un brin droit 100 qui passe dans les gorges des poulies opposées 112 et 113. Si les moyens de traction comprennent plusieurs bandes de roulement 12, la courroie est enroulée en hélice autour de l'objet 10 et chacune des bandes de roulements. Ainsi configuré, la tension de la courroie 110 exerce un effort sur la ou les bandes de roulements, permettant de maintenir en contact de manière continue les moyens de traction et l'objet à haler.

Avantageusement, la courroie est réalisée dans un matériau élastique. Avantageusement, la courroie est tendue élastiquement. La courroie 110 est avantageusement tendue élastiquement entre les deux poulies principales 112, 113 et enroulée en hélice autour de l'objet à haler de façon à exercer l'effort sur la bande de roulement pour maintenir en contact de manière continue la bande de roulement sur l'objet à haler. Avantageusement, la courroie 110 est tendue élastiquement sur toute sa longueur. Ainsi la courroie s'adapte automatiquement à un changement de diamètre de l'objet à haler. L'adaptation au diamètre du câble ne nécessite pas la prévision de dispositif de renvoi dédié.

Les moyens de préhension comprennent un châssis 114 mobile en rotation autour de l'axe X de traction de l'objet. Le châssis mobile 114 est formé de deux flasques 15 et 16 reliés par des montants longitudinaux 19 et traversées par l'objet à haler et la ou les bandes de roulement 12. Une première poulie principale 112 est fixée sur un premier flasque 15. Une seconde poulie principale 113 est fixée sur un second flasque 16.

Selon un principe similaire à celui décrit en préambule à propos de la figure 1, le découplage de la fonction de traction - réalisée au moyen des bandes de roulement 12 - et de la fonction de préhension - réalisée au moyen de la courroie 110 enroulée en hélice autour des bandes de roulements, est obtenu en entrainant de manière coordonnée les deux moyens. Les moyens d'entrainement (non représentés sur la figure 2) assurent d'une part le déplacement de la bande de roulement 12, par exemple en entrainant en rotation une des poulies 13 ou 14 ; l'adhérence de la bande de roulement entrainant dans son mouvement, par friction, le déplacement de l'objet à haler. Les moyens d'entrainement assurent d'autre part, le bobinage et le débobinage de la courroie 110 en entrainant en rotation le châssis 114. L'objet 10 est alors entrainé en translation selon l'axe X tout en étant maintenu étroitement en contact avec les bandes de roulement.

Les moyens d'entrainement sont configurés pour assurer un entrainement coordonné des moyens de traction et des moyens de préhension. Par exemple, les moyens d'entrainement comprennent un actionneur, tel qu'un moteur électrique, un moteur thermique ou un moteur hydraulique, et un mécanisme de synchronisation capable de convertir un mouvement de rotation généré par l'actionneur, en deux mouvements coordonnés permettant d'entrainer les moyens de traction, par exemple en entrainant en rotation la poulie 14, et les moyens de préhension, par exemple en entrainant en rotation le châssis mobile 114. Les moyens d'entrainement peuvent comprendre un dispositif réducteur monté sur un arbre principal entrainé par un actionneur rotatif, comprenant par exemple un système d'engrenage et de réducteurs 116 sur lequel sont accouplés deux arbres secondaires permettant de mettre en rotation les poulies 14 qui assurent l'entraînement des bandes roulement 12, ainsi que la poulie 16 qui entraîne en rotation le châssis 114. D'autres formes de moyens d'entrainement peuvent aussi être envisagées sans sortir du cadre de l'invention. Par exemple, les moyens de traction et de préhension peuvent être entrainés par deux actionneurs dédiés indépendants et un dispositif de contrôle assurant la synchronisation entre les deux actionneurs.

Il est aussi envisagé des moyens de préhension comprenant plusieurs courroies. Les courroies sont avantageusement enroulées en hélice autour de l'objet à haler et de manière enchevêtrée le long du sens de halage. Chacune des courroies peut être tendue entre deux poulies principales reliées respectivement au premier et second flasques 15 et 16. Chaque courroie assure un maintien des moyens de traction sur l'objet à haler. La rotation du châssis mobile entraine le bobinage et le débobinage de chacune des courroies de manière simultanée. Le montage de chacune des courroies est alors avantageusement similaire et identique à ce qui sera décrit par la suite, notamment concernant le montage de la courroie avec les poulies principales et la poulie de renvoi

Le dispositif selon l'invention comporte donc deux moyens ou sous-ensembles distincts pour assurer les fonctions de traction et de préhension. Les moyens de traction sont animés d'un mouvement de translation selon l'axe de l'objet tandis que les moyens de préhension sont animés d'un mouvement de rotation autour du même axe. La séparation des moyens a pour avantage d'assurer le découplage des efforts exercés sur l'objet à haler. Cela permet de fixer la force d'entrainement de l'objet à haler en jouant sur deux paramètres indépendants, à savoir le couple d'entrainement des bandes de roulement et la tension de la courroie.

Ces deux moyens exerçant des fonctions distinctes coopèrent pour assurer une traction continue de l'objet à haler et une bonne répartition des contraintes sur sa surface. L'ensemble du dispositif a une position fixe.

Selon un aspect de l'invention, le dispositif de halage comprend aussi des moyens de réglage configurés pour pouvoir ajuster l'effort exerçé sur les moyens de traction. Dans l'exemple représenté sur la figure 2, les moyens de réglage comprennent une poulie de renvoi 30, sur laquelle la courroie 110 est montée. La poulie de renvoi 30 est déplaçable par rapport aux deux poulies principales 112 et 113, de sorte à ajuster la tension de la courroie 110, permettant d'ajuster l'effort exerçé par la bande de roulement sur l'objet à haler.

Préférentiellement, les poulies principales 112, 113 sont fixes en translation selon, l'axe longitudinal X de l'objet à haler par rapport au châssis mobile en rotation autour de l'axe de l'objet à haler. Autrement dit, les poulies principales ne sont pas mobiles en translation selon l'axe longitudinal de l'objet à haler 10 par rapport au châssis 114. Les poulies principales 112, 113 sont les premières poulies rencontrées par la courroie 110 de part et d'autre de son enroulement autour de l'objet haler 10, c'est-à-dire en sortie de son enroulement autour de l'objet à haler de part et d'autre dudit enroulement. La poulie de renvoi 30 est rencontrée après les poulies principales en sortie de l'enroulement. La poulie de renvoi 30 est mobile en translation par rapport aux poulies principales 112, 113 le long de l'axe longitudinal de l'objet à haler 10.

Par conséquent, lorsque la poulie de renvoi est translatée le long de l'axe longitudinal par rapport aux poulies principales, le pas de l'hélice, l'angle de l'hélice et la longueur de l'hélice formés par la courroie 110 selon l'axe longitudinal de l'objet à haler restent inchangés. Cela permet de bien maitriser l'effort exercé sur l'objet à haler par les moyens de traction (et notamment par la (ou les) bande(s) de roulement 12) car il ne dépend que de la tension de la courroie et de limiter les risques de flexion de l'objet à haler, grâce à la tension des moyens de traction. Par ailleurs, du fait de la conservation du pas et de l'angle d'hélice formés par la courroie 110, on limite le risque de chevauchement des spires de l'hélice lors de la translation de la poulie de renvoi ce qui limite les risques de coincement de l'objet à haler. Or, une fois que l'objet est coincé du fait d'un chevauchement des spires, il est nécessaire de venir démonter et remonter la courroie pour pouvoir se servir à nouveau du dispositif de halage.

Préférentiellement, les moyens de réglage comprennent un flasque mobile 31, traversée par l'objet à haler 10 et la ou les bandes de roulement 12, monté entre les deux flasques 15 et 16. La poulie de renvoi 30 est fixée sur le flasque mobile 31. Le flasque mobile 31 peut être déplacé par translation selon l'axe X, comme représenté par la flèche 300, entre le premier et le second flasque 15 et 16, de sorte à ajuster la tension de la courroie 110. Pour cela, le flasque mobile 31 comprend des ouvertures traversées par les montants longitudinaux 19. Les ouvertures du flasque mobile peuvent être configurées de manière à assurer le guidage en translation du flasque par rapport aux montants longitudinaux.

Le montage de la courroie 110 représenté sur la figure 2 est analogue à celui d'un palan généralement mis en œuvre pour réduire l'effort nécessaire pour rapprocher deux ensembles de poulies. Dans notre cas, le montage en palan de la courroie au moyen d'une poulie de renvoi, autrement dénommée moufle, déplaçable par rapport à deux poulies fixes permet avantageusement de modifier la tension de la courroie. Dans l'exemple représenté sur la figure 2, la courroie est tendue entre une poulie 112, une poulie de renvoi 30 et une poulie double 113 à deux diamètres différents. Le montage en palan peut mettre en œuvre des poulies doubles de diamètres distincts, comme représenté sur la figure 2, ou des poulies doubles de mêmes diamètres, comme représenté sur les figures suivantes. Divers types de montage de la courroie autour des poulies principales et des poulies de renvoi sont possibles sans sortir du cadre de l'invention.

Dans une mise en œuvre privilégiée, les moyens de réglage sont configurés pour permettre de déplacer la poulie de renvoi entre une première et une seconde position, déterminée de manière à exercer sur l'objet à haler un effort compris entre une valeur minimale proche de zéro et une valeur maximale prédéterminée. Dans la première position, la courroie est très faiblement tendue autour de l'objet à haler. Le dispositif est en position dite débrayée. La tension de la courroie aurait pu être nulle dans la première position. Avantageusement, une faible tension est conservée dans cette position de façon à éviter que la courroie ne s'échappe des poulies. Dans la première position, la tension de la courroie est telle que le dispositif de halage ne permet pas le halage de l'objet à haler. Autrement dit, la valeur minimale de l'effort exercé sur l'objet à haler, par la courroie 110 et la (ou les) bande(s) de roulement 12, ne permet pas le halage de l'objet à haler par le déplacement de la (ou les) bande(s) de roulement. L'effort de friction est insuffisant pour assurer le halage. Dans la seconde position, dite embrayée, une tension maximale est imposée à la courroie. L'effort exercé par la courroie sur la ou les bandes de roulement est maximal. Cet effort permet le halage de l'objet à haler. Avantageusement, la valeur de l'effort minimal est comprise entre 5 Newtons et 100 Newtons.

Le dispositif de halage ainsi muni des moyens de réglage permet avantageusement d'adapter la tension exerçée sur la courroie. Le réglage peut être réalisé au cours du halage, à la fois pour augmenter ou réduire la tension de la courroie et donc l'effort de halage. Le dispositif de halage peut être configuré pour permettre de débrayer l'objet à haler, en exerçant sur l'objet un effort de préhension proche de zéro.

Les moyens de réglage permettent avantageusement de limiter le vieillissement de la courroie, généralement en matériau élastomère. Contrairement aux dispositifs de l'art antérieur, il devient possible d'adapter la tension de la courroie à chaque instant en fonction des besoins de la mission. En pratique, il devient possible d'imposer une tension à la courroie uniquement lors d'une opération de halage. Pour une application à un système sonar, la tension de la courroie peut être relachée dès lors que le déploiement ou le retrait de l'antenne est achevé.

Bien entendu, les bénéfices du dispositif de l'art antérieur sont conservés. Le dispositif de halage selon l'invention permet ainsi d'assurer un mouvement de halage continu, évitant à l'objet halé de subir des à-coups pouvant l'endommager. Le mouvement est également réversible et peut être utilisé pour la mise à l'eau et le retrait de l'objet. Le dispositif selon l'invention peut en outre avantageusement s'adapter au halage d'objet dont la section n'est pas constante ou encore à des objets constitués de portions rigides et de portions plus souples. Il peut enfin fonctionner de manière automatique et présente ainsi l'avantage de limiter le besoin de recourir à une intenvention humaine dans des conditions parfois assez périlleuses.

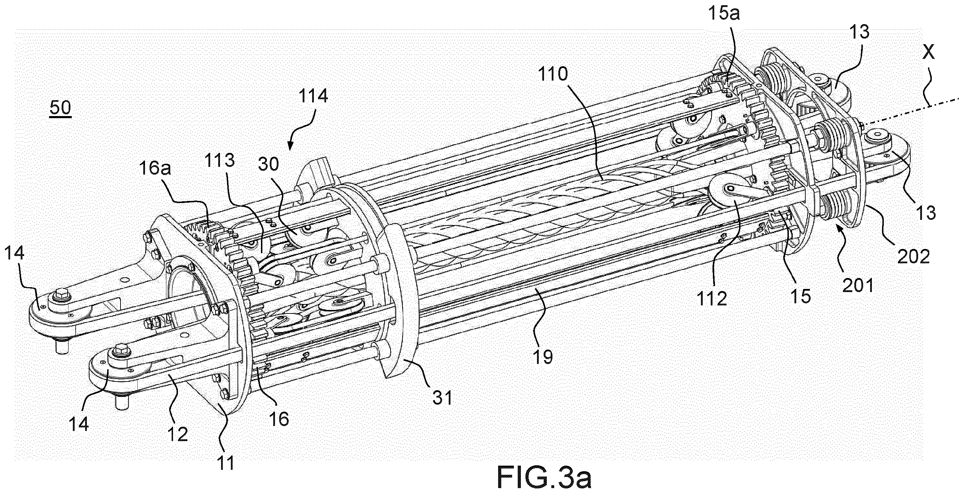

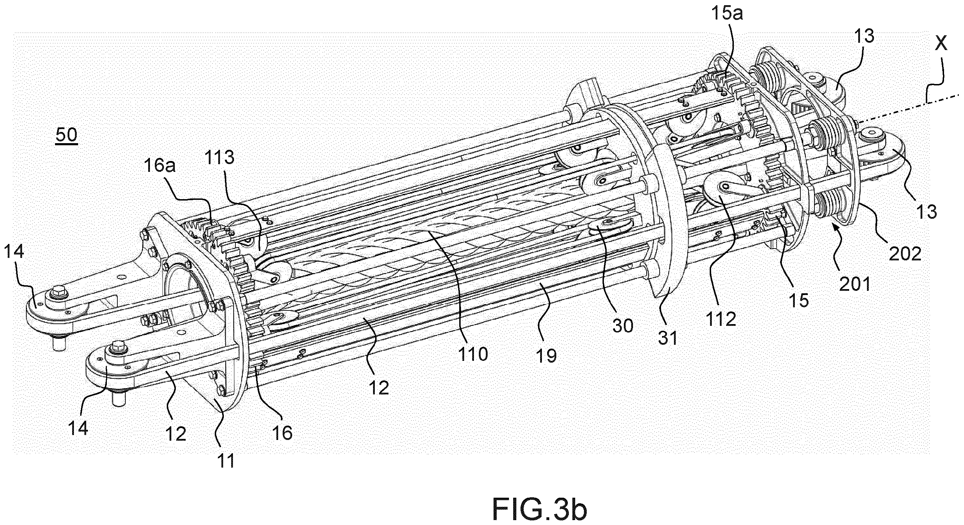

Les **figures 3a** **et** **3b** représentent un premier exemple de dispositif de halage comprenant des moyens de préhension ajustable, respectivement dans une configuration débrayée et une configuration embrayée.

Cet exemple de dispositif de halage 50 reprend le principe décrit ci-dessus au moyen de la figure 2. Ainsi, le dispositif 50 comprend :
- des moyens de traction capables d'entrainer l'objet à haler par friction,
- des moyens de préhension capables d'exercer un effort sur les moyens de traction maintenant en contact les moyens de traction et l'objet halé,
- des moyens d'entrainement, aptes à entrainer les moyens de traction et les moyens de préhension de manière coordonnée.

Les moyens de traction comprennent deux bandes de roulement 12 à fort pouvoir d'adhérence, tendues entre deux poulies 13 et 14 pouvant être entrainées en rotation par les moyens d'entrainement (non représentés). Les moyens de préhension comprennent un châssis mobile 114 formé de deux flasques 15 et 16 reliés par des montants longitudinaux 19. Les flasques 15 et 16 présentent une forme de disque évidé, et sont traversés par l'objet à haler (non représenté) et les deux bandes de roulement. Les moyens de préhension comprennent aussi une courroie 110 enroulée, entre les flasques 15 et 16, en hélice autour de l'objet à haler et les deux bandes de roulement. Le châssis 114 est mobile en rotation autour de l'axe X de traction. Il peut être entrainé par les moyens d'entrainement par l'intermédiaire de deux roues dentées 15a et 16a montées en périphérie des deux flasques 15 et 16.

Le dispositif 50 comprend également des moyens de réglage capables d'ajuster, au cours du halage de l'objet, l'effort exercé sur les moyens de traction. Comme précédemment, les moyens de réglage comprennent une poulie de renvoi 30 fixée sur un flasque 31 mobile en translation entre les deux flasques 15 et 16. Sur la figure 3a, la flasque mobile 31 est dans une première position imposant une faible tension à la courroie, l'effort exercé entre les bandes de roulement et l'objet à haler est proche de zéro comme cela a été décrit précédemment. Le dispositif est en configuration débrayée. Sur la figure 3b, le flasque mobile 31 est dans une seconde position imposant une tension élevée à la courroie, l'effort exercé entre les bandes de roulement et l'objet à haler est maximal. Le dispositif est en configuration embrayée.

Il est envisagé par l'invention de basculer entre les deux positions au moyen d'un actionneur dédié, comme par exemple un actionneur linéaire électrique ou hydraulique, capable de déplacer le flasque mobile. Il est aussi envisagé de mettre en œuvre un mécanisme de débrayage lié au déplacement de l'objet à haler. Ainsi, les moyens de réglage peuvent être configurés de manière à ce qu'un relief en surface de l'objet à haler, comme par exemple une noix de fin de course, entraine mécaniquement, par le déplacement de l'objet halé, le déplacement de la poulie de renvoi vers sa position débrayée, de sorte à sensiblement annuler l'effort exercé par la bande de roulement sur l'objet.

Notons également que le dispositif 50 représenté sur les figures 3a et 3b se distingue des dispositifs déjà décrits par l'architecture des moyens de préhension et des moyens de réglage. En particulier, les moyens de préhension comprennent plusieurs poulies principales 112 et 113 sur chacun des flasques 15 et 16. Dans l'exemple représenté, la courroie 110 est tendue entre six poulies 112 fixées sur le flasque 15 et six poulies 113 fixées sur le flasque 16. La courroie est enroulée en hélice autour de l'objet à haler et des bandes de roulement en six passes successives. Ce type de montage à plusieurs hélices enchevêtrées permet avantageusement d'équilibrer la tension exerçé sur la courroie, et de répartir angulairement de l'effort exerçé sur les bandes de roulements. Il permet une plus grande variation de la tension de la courroie, c'est-à-dire de la longueur de la courroie.

Les moyens de réglage comprennent également plusieurs poulies de renvoi 30 fixées sur le flasque mobile 31. Dans l'exemple représenté, six poulies de renvoi sont fixées sur le flasque mobile 31, et coopèrent avec les six poulies principales simples 112 et doubles 113 des flasques 15 et 16. Le déplacement en translation du flasque mobile 31 permet d'ajuster la tension de la courroie 110 de manière équilibrée. L'effort exerçé sur les bandes de roulements est réparti angulairement de manière homogène.

Il est aussi envisagé par l'invention de mettre en œuvre des moyens de traction comprenant une ou plusieurs bandes de roulement 12 présentant une forme en arc de cercle, de sorte à épouser la forme de l'objet à haler sur une portion de sa circonférence.

Selon un autre aspect de l'invention, le dispositif peut avantageusement comprendre des moyens pour ajuster la tension des bandes de roulement enroulées entre les poulies 13 et 14. Comme représenté sur les figures 3a et 3b, les poulies 13 sont fixées sur un flasque 202 pouvant coulisser selon l'axe longitudinal X par rapport au châssis 11. Le flasque 202 est relié au châssis 11 par l'intermédiaire d'un ensemble de ressorts 201 tendant à écarter les poulies 13 et le chassis 114 l'un de l'autre, de sorte à contraindre en tension la bande de roulement 12. Autrement dit, les moyens de traction sont munis d'un mécanisme à ressort 201 configuré pour tendre la ou les bandes de roulement. Cette configuration permet avantageusement de s'adapter à des variations de diamètre de l'objet à haler.

On a indiqué en préambule de la présente demande les difficultés rencontrées par les dispositifs de l'art antérieur pour effectuer des opérations de maintenance sur le dispositif de halage. En particulier, le remplacement périodique de la courroie élastomère des moyens de préhension est une opération délicate à réaliser. L'invention cherche donc à faciliter les interventions de maintenance ou de réparation sur le dispositif.

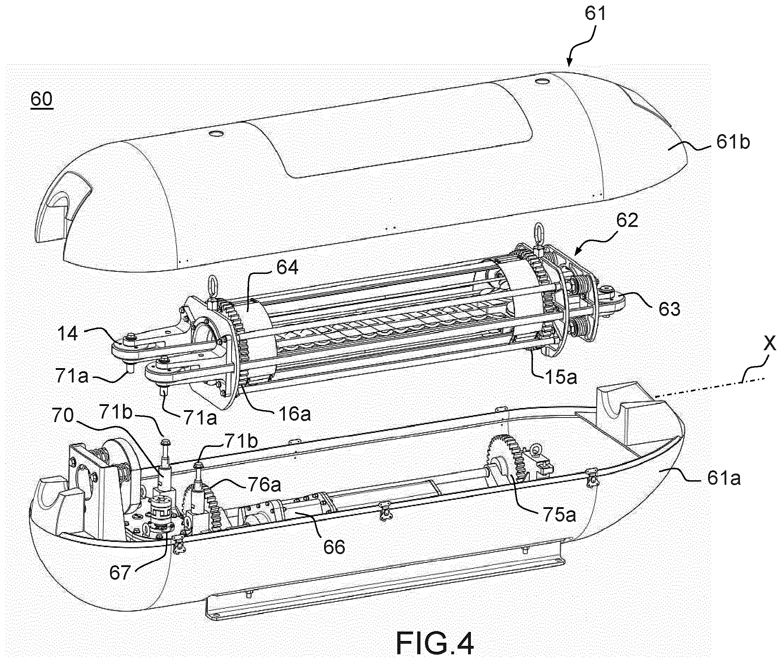

La **figure 4** représente en vue éclaté un second exemple de dispositif de halage comprenant plusieurs sous-ensembles modulaires. Dans ce second exemple, le dispositif 60 comprend un bâti 61 destiné à être monté par exemple sur un batiment marin, et un ensemble amovible 62. L'ensemble amovible est similaire au dispositif décrit précédemment par les figures 3a et 3b. Il comprend notamment des moyens de traction 63 et des moyens de préhension 64. Il peut aussi comprendre des moyens de réglage de l'effort exerçé sur les moyens de traction. Il est toutefois bien entendu que le principe d'un dispositif de halage modulaire, permettant une réparabilité améliorée, est également applicable en l'absence de ces moyens de réglage.

Les modes de réalisation précédemment décrits pour les moyens de traction 63, de préhension 64, ou de réglage sont envisagés pour ce second exemple de dispositif. Leur définition détaillée n'est pas reprise de manière systématique dans la suite.

Comme représenté sur la figure 4, le bâti 61 comprend une partie inférieure 61a et une partie supérieure 61b amovibles, entre lesquelles peut être monté l'ensemble amovible 62. Le bâti 61 comprend en outre un actionneur 66, tel qu'un moteur thermique, un moteur électrique ou un moteur hydraulique, et un mécanisme de synchronisation 67 entrainé par l'actionneur 66.

Le mécanisme de synchronisation 67 est relié de manière amovible aux moyens de traction 63 et de préhension 64. Le mécanisme de synchronisation 67 est configuré pour entrainer en mouvement les moyens de traction 63 et les moyens de préhension 64 de manière coordonnée pour assurer une traction continue et homogène de l'objet.

Les moyens de traction comprennent au moins une poulie 14 et une bande de roulement 12 venant en contact de l'objet à haler, et pouvant être entrainée en mouvement par rotation de la poulie 14. Le mécanisme de synchronisation 67 comprend un arbre 70, configuré pour entrainer en rotation la poulie 14 des moyens de traction. La poulie 14 et l'arbre 70 peuvent être accouplés de manière amovible au moyen de deux crabots 71a et 71b, solidaires respectivement de la poulie 14 et de l'arbre 70. Les deux crabots forment un sous-ensemble d'accouplement ou un dispositif d'accouplement. D'autres moyens d'accouplement ou sous-ensembles d'accouplement sont également envisagés, en particulier un accouplement par friction. Sur la figure 4, les moyens de traction comprennent deux bandes de roulements entrainées au moyen de deux poulies. Les moyens de synchronisation comprennent logiquement deux arbres 70 capables d'entrainer les deux bandes de roulement, et accouplés avec les deux poulies 14 de manière amovible au moyen de deux dispositifs à crabots.

Comme précédemment décrit, les moyens de préhension comprennent un châssis mobile en rotation autour de l'axe de traction de l'objet, formé d'un premier et d'un second flasques 15 et 16 reliés par des montants longitudinaux et traversées par l'objet à haler et la bande de roulement. Chacun des premier et le second flasques 15 et 16 comprend une roue dentée, respectivement référencée 15a et 16a, montée en périphérie de chacun des flasques. La rotation des roues dentées entraine en rotation le châssis mobile, en bobinant et débobinant la courroie respectivement du coté du premier et du second flasque. Le mécanisme de synchronisation 67 comprend un premier pignon 75a et un second pignon 76a configurés pour coopérer respectivement avec la première et la seconde roues dentées 15a et 16a, de manière à entrainer en rotation le châssis mobile. Il est aussi envisagé d'assurer l'entrainement en rotation du chassis mobile au moyen d'un unique ensemble pignon et roue dentée. Par ailleurs, la ou les roues dentées peuvent montées en périphérie des flasques, ou plus généralement être solidaires du châssis mobile.

Dans le cas où l'ensemble amovible 62 comprend des moyens de réglage de l'effort exerçé sur les moyens de traction, par déplacement d'une poulie de renvoi par rapport aux deux poulies principales, le bâti peut avantageusement comprendre un second actionneur, par exemple un actionneur linéaire ou hydraulique, relié de manière amovible aux moyens de réglage et configuré pour permettre de déplacer la poulie de renvoi.

Cette configuration d'un dispositif de halage amovible est particulièrement avantageuse. En cas de défaillance des moyens de traction ou de préhension, ou lors d'une opération de maintenance périodique, l'ensemble amovible 62 peut être désolidarisé du bâti, et transporté vers un atelier pour faciliter l'intervention d'un opérateur. L'ensemble amovible peut aussi être remplacé par un second ensemble pour assurer une continuité de mission lors d'une maintenance sur l'ensemble amovible. Les éléments de structure ainsi que les composants les plus fiables (moteur, mécanisme de synchronisation) restent fixés de manière permanente au bâtiment.

Avantageusement, les moyens de traction et les moyens de préhension de l'ensemble amovible peuvent être reliés aux moyens d'entrainement par un unique mouvement de translation de l'ensemble amovible par rapport au bâti dans un plan perpendiculaire à la direction de halage. En positionnant la direction de halage du dispositif selon un axe horizontal, l'ensemble amovible peut être monté et démonté du bâti par un déplacement vertical par rapport au bâti, venant accoupler simultanément les roues dentées avec les pignons, et la poulie avec l'arbre. A cet effet, le dispositif est avantageusement muni de moyens de levage ou dispositif de levage configurés pour permettre de déplacer l'ensemble amovible par rapport au bâti lors d'une opération de maintenance.

Il est aussi envisagé par la présente invention de doter le dispositif de halage d'un frein capable de ralentir les moyens de préhension ou les moyens de traction. Le frein peut être configuré pour agir en sortie du moteur ou sur le châssis mobile en rotation.

Pour améliorer la capacité de pilotage du dispositif de halage, il est encore envisagé de mettre en œuvre des moyens de mesure comprenant au moins un capteur permettant de mesurer le du mouvement de l'objet halé, par exemple un capteur de déplacement ou un capteur de vitesse de l'objet halé.

## Revendications

1. Dispositif de halage d'objets (10) de forme tubulaire de grande longueur, comprenant :
- des moyens de traction (12, 13, 14) aptes à entrainer par friction, l'objet (10) selon un sens de halage (118),
- des moyens de préhension (110, 112, 113) aptes à exercer un effort sur les moyens de traction (12) pour maintenir en contact de manière continue les moyens de traction (12) et l'objet halé (10); les moyens de préhension (110) étant animés d'un mouvement relatif par rapport à l'objet halé dans un sens opposé au sens de halage (118),
- des moyens d'entrainement (115, 116), aptes à entrainer les moyens de traction (12, 13, 14) et les moyens de préhension (110, 112, 113) de manière coordonnée pour assurer une traction continue et homogène de l'objet (10),
- les moyens de traction (12, 13, 14) comprenant une bande de roulement (12) venant en contact de l'objet à haler (10), réalisée dans un matériau à fort pouvoir d'adhérence,
- les moyens de préhension (110, 112, 113) comprenant :
- deux poulies principales (112, 113) et une courroie (110) tendue entre les deux poulies principales (112, 113) et enroulée en hélice autour de l'objet à haler (10) et la bande de roulement (12), de façon à exercer un effort sur la bande de roulement (12) pour maintenir en contact de manière continue la bande de roulement (12) sur l'objet à haler (10), et
- un chassis (114) mobile en rotation autour de l'axe (X) de traction de l'objet, formé de deux flasques (15, 16) reliés par des montants longitudinaux (19) et traversés par l'objet à haler (10) et la bande de roulement (12); une première et une seconde des deux poulies (112, 113) étant fixées respectivement sur un premier et un second des deux flasques (15, 16) ;
le dispositif de halage d'objets étant **caractérisé en ce qu'**il comprend en outre des moyens de réglage (30, 31), aptes à ajuster l'effort exercé par les moyens de préhension (110, 112, 113) sur les moyens de traction (12), les moyens de réglage (30, 31) comprenant :
- une poulie de renvoi (30) guidant la courroie (110) et pouvant être déplacée par rapport aux deux poulies principales (112, 113), de sorte à ajuster la tension de la courroie (110), permettant d'ajuster l'effort exercé par la bande de roulement (12) sur l'objet à haler (10),
- un flasque mobile (31) traversé par l'objet à haler (10) et la bande de roulement (12), monté entre le premier et le second flasque (15, 16), la poulie de renvoi (30) étant fixée sur le flasque mobile (31) ; le flasque mobile (31) pouvant être déplacé par translation (300) entre le premier et le second flasques (15, 16) de sorte à ajuster la tension exerçée sur la courroie (110).

2. Dispositif de halage selon la revendication 1, dans lequel la courroie est tendue élastiquement.

3. Dispositif de halage selon l'une quelconque des revendications précédentes, dans lequel les moyens de préhension (110, 112, 113) comprennent un châssis (114) mobile en rotation autour de l'axe longitudinal (X) de l'objet à haler, les poulies principales (112, 113) étant fixes en translation selon, l'axe longitudinal (X) de l'objet à haler, par rapport au châssis (114), les poulies principales (112, 113) étant les premières poulies rencontrées par la courroie (110) de part et d'autre de son enroulement autour de l'objet haler (10).

4. Dispositif selon l'une des revendications précédentes, dont la poulie de renvoi (30) peut être déplacée entre une première et une seconde position déterminée de manière à permettre d'exercer sur l'objet à haler (10) un effort compris entre une valeur minimale proche de zéro et une valeur maximale prédéterminée.

5. Dispositif selon la revendication 4, destinée au halage d'un objet présentant un relief sur une portion de sa longueur, et dont les moyens de réglage (30, 31) sont configurés de manière à ce que le déplacement du relief au cours du halage entraine le déplacement de la poulie de renvoi (30) vers sa première position, de sorte à sensiblement annuler l'effort exercé par la bande de roulement (12) sur l'objet à haler (10).

6. Dispositif selon l'une des revendications précédentes, dont les moyens de réglage (30, 31) comprennent un actionneur linéaire apte à déplacer la poulie de renvoi (30) en fonction d'une consigne.

7. Dispositif selon l'une quelconque des revendications précédentes, comprenant plusieurs première et seconde poulies principales (112, 113) fixées respectivement sur le premier et le second flasques (15, 16); la courroie (110) étant tendue entre les premières et secondes poulies principales (112, 113) et enroulée en hélice plusieurs fois autour de l'objet à haler (10) et la bande de roulement (12).

8. Dispositif selon l'une quelconque des revendications précédentes, dans lequel les moyens de préhension comprennent plusieurs courroies (110) et plusieurs première et seconde poulies principales (112, 113) fixées respectivement sur le premier et le second flasques (15, 16) ; chaque courroie (110) étant associée à une première et une seconde poulies principales (112, 113) et tendue entre lesdites première et secondes poulies principales (112, 113) et enroulée en hélice autour de l'objet à haler (10) et la bande de roulement (12).

9. Dispositif selon l'une quelconque des revendications précédentes, dont les moyens de réglage comprennent plusieurs poulies de renvoi (30) fixées sur le flasque mobile (31).

10. Dispositif selon l'une quelconque des revendications précédentes, dont les moyens de traction (12, 13 14) comprennent un mécanisme à ressort (201) configuré pour tendre la bande de roulement (12) de sorte à s'adapter à une variation de diamètre de l'objet à haler (10).

11. Dispositif selon l'une des revendications précédentes, dont les moyens de traction (12, 13, 14) comprennent au moins une bande de roulement (12) présentant une forme en arc de cercle, de sorte à épouser la forme de l'objet à haler (10) sur une portion de sa circonférence.

12. Dispositif selon l'une des revendications précédentes, dont les moyens de traction (12, 13, 14) comprennent plusieurs bandes de roulement (12) venant en contact de l'objet à haler (10), réalisées dans un matériau à fort pouvoir d'adhérence.

13. Dispositif selon l'une des revendications précédentes, comprenant un frein capable de ralentir les moyens de préhension (110,112, 113) ou les moyens de traction (12, 13, 14).

14. Dispositif selon l'une des revendications précédentes, comprenant des moyens de mesure du mouvement de l'objet halé (10).

## Patentansprüche

1. Vorrichtung zum Schleppen von rohrförmigen Objekten (10) großer Länge, Folgendes umfassend:
- Zugmittel (12, 13, 14), die in der Lage sind, in ihrer Bewegung durch Reibung das Objekt (10) in einer Schlepprichtung (118) anzutreiben,
- Greifmittel (110, 112, 113), die in der Lage sind, eine Kraft auf die Zugmittel (12) auszuüben, um die Zugmittel (12) und das geschleppte Objekt (10) kontinuierlich in Kontakt zu halten; wobei die Greifmittel (110) mit einer relativen Bewegung in Bezug auf das geschleppte Objekt in einer zur Schlepprichtung entgegengesetzten Richtung (118) angetrieben werden,
- Antriebsmittel (115, 116), welche in der Lage sind, die Zugmittel (12, 13, 14) und die Greifmittel (110, 112, 113) koordiniert anzutreiben, um einen kontinuierlichen und einheitlichen Zug des Objekts (10) sicherzustellen,
- wobei die Zugmittel (12, 13, 14) ein Laufband (12) umfassen, welches mit dem zu schleppenden Objekt (10) in Kontakt geht, welches aus einem Material mit starkem Haftvermögen hergestellt ist,
- wobei die Greifmittel (110, 112, 113) Folgendes umfassen:
- zwei Hauptscheiben (112, 113) und einen Riemen (110), welcher zwischen den beiden Hauptscheiben (112, 113) gespannt und spiralförmig um das zu schleppende Objekt (10) und das Laufband (12) in einer Weise gewickelt ist, dass er eine Kraft auf das Laufband (12) ausübt, um das Laufband (12) an dem zu schleppenden Objekt (10) kontinuierlich in Kontakt zu halten, und
- ein Gestell (114), welches in Rotation um die Zugachse (X) des Objekts (10) beweglich ist, gebildet aus zwei Flanschen (15, 16), welche miteinander durch Längspfosten (19) verbunden und durch das zu schleppende Objekt (10) und das Laufband (12) durchquert sind; wobei eine erste und eine zweite der beiden Scheiben (112, 113) jeweils an einem ersten und einem zweiten der beiden Flansche (15, 16) befestigt sind;
wobei die Vorrichtung zum Schleppen von Objekten **dadurch gekennzeichnet ist, dass** sie ferner Einstellmittel (30, 31) umfasst, welche in der Lage sind, die durch die Greifmittel (110, 112, 113) auf die Zugmittel (12) ausgeübte Kraft anzupassen, wobei die Einstellungsmittel (30, 31) Folgendes umfassen:
- eine Umlenkscheibe (30), welche den Riemen (110) führt und in Bezug auf die beiden Hauptscheiben (112, 113) verschoben werden kann, um die Spannung des Riemens (110) anzupassen, wodurch die Möglichkeit besteht, die durch das Laufband (12) auf das zu schleppende Objekt (10) ausgeübte Kraft anzupassen,
- einen beweglichen Flansch (31), welcher durch das zu schleppende Objekt (10) und das Laufband (12) durchquert wird, welches zwischen dem ersten und dem zweiten Flansch (15, 16) montiert ist, wobei die Umlenkscheibe (30) an dem beweglichen Flansch (31) befestigt ist; wobei der bewegliche Flansch (31) (300) zwischen dem ersten und dem zweiten Flansch (15, 16) verschoben werden kann, um die auf den Riemen ausgeübte Spannung (110) anzupassen.

2. Vorrichtung zum Schleppen nach Anspruch 1, wobei der Riemen elastisch gespannt wird.

3. Vorrichtung zum Schleppen nach einem der vorhergehenden Ansprüche, wobei die Greifmittel (110, 112, 113) ein in Rotation um die Längsachse (X) des zu schleppenden Objekts bewegliches Gestell (114) umfassen, wobei die Hauptscheiben (112, 113) translatorisch entlang der Längsachse (X) des zu schleppenden Objekts in Bezug auf das Gestell (114) fest sind, wobei die Hauptscheiben (112, 113) die ersten Scheiben sind, die der Riemen (110) beiderseits seiner Wicklung um das zu schleppende Objekt (10) trifft.

4. Vorrichtung nach einem der vorhergehenden Ansprüche, deren Umlenkscheibe (30) zwischen einer ersten und einer zweiten bestimmten Position verschoben werden kann, um das Ausüben einer Kraft auf das zu schleppende Objekt (10) zu ermöglichen, welche zwischen einem Mindestwert nahe null und einem vorbestimmten Höchstwert beträgt.

5. Vorrichtung nach Anspruch 4, bestimmt zum Schleppen eines Objekts, welches ein Relief an einem Abschnitt seiner Länge aufweist, und deren Einstellmittel (30, 31) so konfiguriert sind, dass die Bewegung des Reliefs im Zuge des Schleppens die Verschiebung der Umlenkscheibe (30) in Richtung ihrer ersten Position bewirkt, so dass die durch das Laufband (12) auf das zu schleppende Objekt (10) ausgeübte Kraft im Wesentlichen neutralisiert wird.

6. Vorrichtung nach einem der vorhergehenden Ansprüche, deren Einstellungsmittel (30, 31) ein lineares Betätigungselement umfassen, welches in der Lage ist, die Umlenkscheibe (30) angesichts einer Vorgabe zu verschieben.

7. Vorrichtung nach einem der vorhergehenden Ansprüche, umfassend eine Merhzahl von ersten und zweiten Hauptscheiben (112, 113), welche jeweils an dem ersten und dem zweiten Flansch (15, 16) befestigt sind; wobei der Riemen (110) zwischen den ersten und den zweiten Hauptscheiben (112, 113) gespannt und spiralförmig mehrfach um das zu schleppende Objekt (10) und das Laufband (12) gewickelt ist.

8. Vorrichtung nach einem der vorhergehenden Ansprüche, wobei die Greifmittel eine Mehrzahl von Riemen (110) und eine Mehrzahl von ersten und zweiten Hauptscheiben (112, 113) umfassen, welche jeweils am ersten und am zweiten Flansch (15, 16) befestigt sind; wobei jeder Riemen (110) mit ersten und einer zweiten Hauptscheibe (112, 113) zugeordnet und zwischen den ersten und zweiten Hauptscheiben (112, 113) gespannt und spiralförmig um das zu schleppende Objekt (10) und das Laufband (12) gewickelt ist.

9. Vorrichtung nach einem der vorhergehenden Ansprüche, deren Einstellmittel eine Mehrzahl von an dem mobilen Flansch (31) befestigten Umlenkscheiben (30) umfassen.

10. Vorrichtung nach einem der vorhergehenden Ansprüche, deren Zugmittel (12, 13 14) einen Federmechanismus (201) umfassen, welcher konfiguriert ist, um das Laufband (12) in einer Weise zu spannen, dass es sich einer Durchmesserschwankung des zu schleppenden Objekts (10) anpasst.

11. Vorrichtung nach einem der vorhergehenden Ansprüche, deren Zugmittel (12, 13, 14) mindestens ein Laufband (12) umfassen, welches eine kreisbogenförmige Form aufweist, um mit der Form des zu schleppenden Objekts (10) über einen Abschnitt seines Umfangs übereinzustimmen.

12. Vorrichtung nach einem der vorhergehenden Ansprüche, deren Zugmittel (12, 13, 14) eine Mehrzahl von Laufbändern (12) umfassen, welche mit dem zu schleppenden Objekt (10) in Kontakt kommen, welche aus einem Material mit starkem Haftvermögen bestehen.

13. Vorrichtung nach einem der vorhergehenden Ansprüche, umfassend eine Bremse, welche in der Lage ist, die Greifmittel (110, 112, 113) oder die Zugmittel (12, 13, 14) zu verlangsamen.

14. Vorrichtung nach einem der vorhergehenden Ansprüche, beinhaltend Mittel zum Messen der Bewegung des geschleppten Objekts (10).

## Claims

1. A device for hauling extended-length tubular shaped objects (10), comprising:
- traction means (12, 13, 14) able to drive, by friction, the object (10) in a hauling direction (118);
- gripping means (110, 112, 113) able to exert a force on the traction means (12) to continuously keep the traction means (12) and the hauled object (10) in contact, the gripping means (110) being set into a relative movement in relation to the hauled object in a direction opposite to the hauling direction (118);
- drive means (115, 116) able to drive the traction means (12, 13, 14) and the gripping means (110, 112, 113) in a coordinated manner to ensure continuous and homogeneous traction of the object (10);
- the traction means (12, 13, 14) comprising a running belt (12) coming into contact with the object (10) to be hauled, which belt is made from a material with high adhesion power;
- the gripping means (110, 112, 113) comprising:
- two main pulleys (112, 113) and a band (110) stretched between the two main pulleys (112, 113) and helically wound around the object (10) to be hauled and the running belt (12), so as to exert a force on the running belt (12) to keep the running belt (12) in continuous contact on the object (10) to be hauled; and
- a frame (114) free to rotate about the traction axis (X) of the object, made up of two flanges (15, 16) connected by longitudinal struts (19) and traversed by the object (10) to be hauled and the running belt (12), a first and a second one of the two pulleys (112, 113) being respectively attached onto a first and onto a second one of the two flanges (15, 16);
the device for hauling objects being **characterised in that** it further comprises adjustment means (30, 31) able to adjust the force exerted by the gripping means (110, 112, 113) on the traction means (12), the adjustment means (30, 31) comprising:
- a return pulley (30) guiding the band (110) and being able to be moved relative to the two main pulleys (112, 113), so as to adjust the tension of the band (110), allowing adjustment of the force exerted by the running belt (12) on the object (10) to be hauled;
- a movable flange (31) traversed by the object (10) to be hauled and the running belt (12), mounted between the first and the second flange (15, 16), the return pulley (30) being attached onto the movable flange (31), the movable flange (31) being able to be translationally moved (300) between the first and the second flanges (15, 16), so as to adjust the tension exerted on the band (110).

2. The hauling device according to claim 1, wherein the band is elastically stretched.

3. The hauling device according to any one of the preceding claims, wherein the gripping means (110, 112, 113) comprise a frame (114) free to rotate about the longitudinal axis (X) of the object to be hauled, the main pulleys (112, 113) being translationally attached along the longitudinal axis (X) of the object to be hauled, in relation to the frame (114), the main pulleys (112, 113) being the first pulleys that the band (110) encounters on either side of its winding around the object to be hauled (10).

4. The device according to any one of the preceding claims, the return pulley (30) of which can be moved between a first and a second determined position so as to allow a force to be exerted on the object (10) to be hauled that is between a minimum value close to zero and a predetermined maximum value.

5. The device according to claim 4, intended for hauling an object having a relief on a portion of its length, and for which the adjustment means (30, 31) are configured so that the movement of the relief during hauling causes the return pulley (30) to move to its first position, so as to substantially cancel out the force exerted by the running belt (12) on the object to be hauled (10).

6. The device according to any one of the preceding claims, the adjustment means (30, 31) of which comprise a linear actuator able to move the return pulley (30) as a function of a setpoint.

7. The device according to any one of the preceding claims, comprising a plurality of first and second main pulleys (112, 113) respectively attached onto the first and the second flange (15, 16), the band (110) being stretched between the first and the second main pulleys (112, 113) and helically wound several times around the object (10) to be hauled and the running belt (12).

8. The device according to any one of the preceding claims, wherein the gripping means comprise a plurality of bands (110) and a plurality of first and second main pulleys (112, 113) respectively attached onto the first and the second flange (15, 16), each band (110) being associated to a first and a second main pulley (112, 113) and stretched between said first and second main pulleys (112, 113) and helically wound around the object (10) to be hauled and the running belt (12).

9. The device according to any one of the preceding claims, the adjustment means of which comprise a plurality of return pulleys (30) fixed onto the movable flange (31).

10. The device according to any one of the preceding claims, the traction means (12, 13, 14) of which comprise a spring mechanism (201) configured to stretch the running belt (12) so as to adapt to a variation in the diameter of the object (10) to be hauled.

11. The device according to any one of the preceding claims, the traction means (12, 13, 14) of which comprise at least one running belt (12) having an arc of a circle shape, so as to conform to the shape of the object (10) to be hauled on a portion of its circumference.

12. The device according to any one of the preceding claims, the traction means (12, 13, 14) of which comprise a plurality of running belts (12) coming into contact with the object (10) to be hauled, which belts are made from a material with high adhesion power.

13. The device according to any one of the preceding claims, comprising a brake capable of slowing down the gripping means (110, 112, 113) or the traction means (12, 13, 14).

14. The device according to any one of the preceding claims, comprising means for measuring the movement of the hauled object (10).
